# EUROPÄISCHE PATENTANMELDUNG

(11) **EP 0 900 945 A1**
(43) Veröffentlichungstag der Anmeldung: **10.03.1999**
(21) Anmeldenummer: 98111829.2
(22) Anmeldetag: 26.06.1998
(51) Int. Cl.: F16D 1/05, F16D 1/09

(54) **Wellenkupplung**

(30) Priorität: 05.09.1997 DE 29715962 U
(71) Anmelder: Emil Jäger GmbH & Co. KG, D-48153 Münster (DE)
(72) Erfinder: Hambrock, Dieter, 48163 Münster (DE); Treichel, Edmund, 59387 Ascheberg (DE)
(74) Vertreter: Habbel, Ludwig (Lutz)

(57) **Zusammenfassung**

Die Erfindung bezieht sich auf eine Kupplung zur stirnseitigen Verbindung zweier Wellen, mit einer die beiden Wellenenden (1) übergreifenden Hülse (8), die eine an die Außenkontur der beiden Wellenenden (1) angepaßte, von der Kreisform abweichende Innenkontur aufweist, und die etwa mittig ihren größten Außendurchmesser aufweist und sich von dort zu ihren beiden Stirnenden abfallend beidseitig konisch verjüngt und mit zwei Spannringen (4,5), die jeweils einen an die äußere Konzität der Hülse (2) angepaßten, schräg verlaufenden Innendurchmesser aufweisen und die miteinander verbindbar ausgebildet sind.

## Beschreibung

Die Erfindung betrifft eine Kupplung zur stirnseitigen Verbindung zweier Wellen.

Beispielsweise aus dem Bereich der Webmaschinen ist es bekannt, zwei stirnseitig voreinander stehende, miteinander fluchtende Wellenenden miteinander zu verbinden. Bei derartigen Anwendungsbeispielen müssen vergleichsweise hohe Drehmomente übertragen werden.

Der Erfindung liegt die Aufgabe zugrunde, eine Kupplung zur stirnseitigen Verbindung zweier Wellen zu schaffen, mit der frei geführte Wellen radial und axial spielfrei miteinander verbindbar sind.

Diese der Erfindung zugrundeliegende Aufgabe wird durch eine Kupplung mit den Merkmalen des Anspruches 1 gelöst.

Die Erfindung schlägt mit anderen Worten eine im wesentlichen dreiteilige Kupplung vor:

Eine Hülse übergreift die beiden Wellenenden. Durch einen unrunden Querschnitt sowohl der beiden Wellenenden als auch der Innenkontur der Hülse wird die Übertragung von Drehbewegungen ermöglicht. Axiales Spiel und auch radiales Spiel wird dadurch vermieden, daß die Hülse komprimiert wird. Unwuchten können durch diese Spielfreiheit vermieden werden. Eine leichte Montage der Kupplung wird dadurch begünstigt, daß zunächst ein Spiel zwischen den einzelnen Bauteilen zulässig ist. Die Komprimierung der Hülse erfolgt durch zwei Spannringe, die von den beiden Stirnenden her auf die Hülse aufgeschoben werden. Der sich konisch zur Mitte der Hülse erweiternde Durchmesser bewirkt bei zunehmender Annäherung der beiden Spannringe aneinander, eine zunehmende radial Spannwirkung, bis schließlich die spielfreie Verbindung der beiden Wellenenden erzielt ist.

Eine Vielzahn-Verbindung zwischen den Wellenenden und der Hülse erlaubt sowohl die Übertragung hoher Kräfte, als auch eine spielfreie Verbindung.

Vorteilhaft können die Spannringe mit Hilfe von Verbindungsschrauben miteinander verbunden werden.

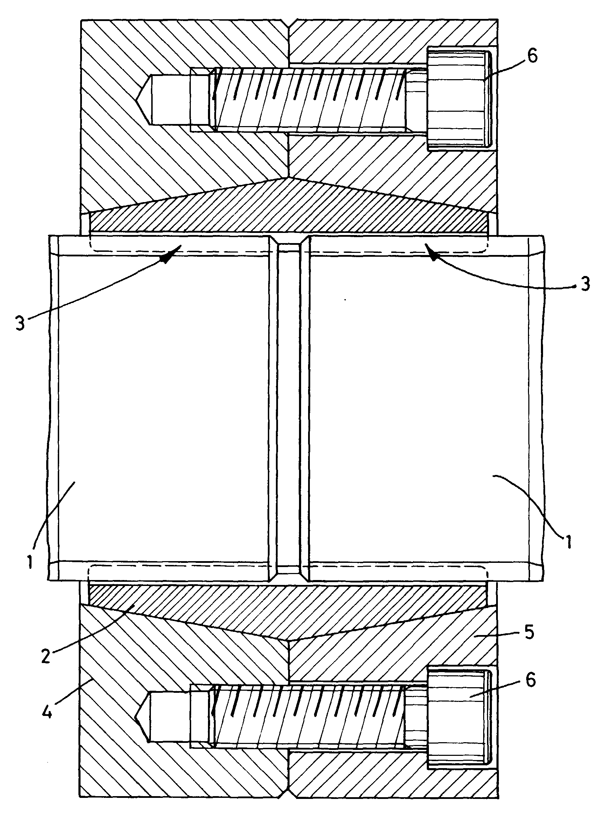

Ein Ausführungsbeispiel der Erfindung wird anhand der Zeichnung im folgenden näher erläutert.

In der Zeichnung sind mit 1 jeweils die beiden Enden von zwei frei geführten Wellen bezeichnet, die miteinander fluchtend angeordnet sind. Die beiden Wellenenden 1 sind durch eine Kupplung miteinander verbunden, wobei eine Hülse 2 der Kupplung die beiden Wellenenden 1 übergreift.

Die Wellenenden 1 weisen jeweils an ihrem Außenumfang und die Hülse 2 weist an ihrem Innenumfang jeweils eine Vielzahn-Kontur 3 auf, so daß die Hülse 2 durch ihren Formschluß die Übertragung einer Drehbewegung von dem einen Wellenende 1 auf das andere Wellenende 1 ermöglicht.

Die Hülse 2 wird durch zwei Spannringe 4 und 5 komprimiert. Zu diesem Zweck weist die Hülse 2 zwei symmetrisch angeordnete Konusflächen auf, wobei der Außendurchmesser der Hülse 2 an ihren beiden Stirnenden am geringsten ist und in ihrer Mitte am größten ist. Korrespondierend zu der Steigung dieser konischen Hülsenbereiche weisen die Spannringe 4 und 5 konisch sich verjüngende bzw. sich erweiternde Innendurchmesser auf.

Die Spannringe 4 und 5 sind durch Verbindungsschrauben 6 miteinander verbunden. Die Verbindungsschrauben 6 greifen bereits in das Innengewinde des Spannringes 4 ein, wenn die beiden Spannringe 4 und 5 noch voneinander beabstandet sind und drucklos an der Hülse 2 anlegen. Ein zunehmendes Anziehen der Verbindungsschrauben 6 bewirkt das Aufgleiten der beiden Spannringe 4 und 5 auf der Hülse 2 und dabei einen zunehmenden Kompressionsdruck, der von den Spannringen 4 und 5 auf die Hülse 2 aufgebracht wird.

Vorteilhaft sind die Hülse 2 und die Spannringe 4 und 5 so bemessen, daß der gewünschte Kompressionsdruck dann erzielt ist, wenn die beiden Spannringe 4 und 5 vollständig aneinander anlegen. Auf diese Weise ist eine einfache Montage und eine einfache Kontrolle des ausreichenden Spanndruckes möglich, ohne daß ein ggf. zwischen den Spannringen 4 und 5 vorgesehener Spalt auf sein exaktes Spaltmaß zu überprüfen wäre. Die unterschiedlichen Kompressionskräfte bei verschieden weit auf die Hülse aufgeschobenen Spannringen 4 und 5 führt selbsttätig zu einer Vergleichmäßigung derart, daß die beiden Spannringe 4 und 5 jeweils gleich weit auf die Hülse 2 aufgeschoben sind, so daß am Ende des Spannvorganges sich die beiden Spannringe 4 und 5 wie in der Zeichnung dargestellt genau über der Mitte der Hülse 2 treffen. Da die beiden konischen Außenflächen der Hülse 2 symmetrisch ausgestaltet sind, ist eine gleichmäßige Spannwirkung über die Länge der Hülse gewährleistet.

## Patentansprüche

1. Kupplung zur stirnseitigen Verbindung zweier Wellen, mit einer die beiden Wellenenden (1) übergreifenden Hülse (2), die eine an die Außenkontur der beiden Wellenenden (1) angepaßte, von der Kreisform abweichende Innenkontur aufweist, und die etwa mittig ihren größten Außendurchmesser aufweist und sich von dort zu ihren beiden Stirnenden abfallend beidseitig konisch verjüngt, und mit zwei Spannringen (4, 5), die jeweils einen an die äußere Konizität der Hülse (2) angepaßten, schräg verlaufenden Innendurchmesser aufweisen und die miteinander verbindbar ausgebildet sind.

2. Kupplung nach Anspruch 1, gekennzeichnet durch eine Vielzahn-Kontur (3) an den Wellenenden (1) und in der Hülse (2).

3. Kupplung nach Anspruch 1 oder 2, dadurch gekennzeichnet, daß die Spannringe (4, 5) durch mehrere Verbindungsschrauben (6) verbunden sind.
